# EUROPÄISCHE PATENTSCHRIFT

(11) **EP 1 215 247 B1**
(45) Veröffentlichungstag und Bekanntmachung des Hinweises auf die Patenterteilung: **09.03.2005**
(21) Anmeldenummer: 01128479.1
(22) Anmeldetag: 06.12.2001
(51) Int. Cl.: C08L 83/07, C07F 15/00, C08K 5/56, C08K 3/22

(54) **Härtbare Organopolysiloxanmassen**
Curable polysiloxane compositions
Compositions de polysiloxane durcissables

(30) Priorität: 14.12.2000 DE 10062181
(43) Veröffentlichungstag der Anmeldung: 19.06.2002
(73) Patentinhaber: Wacker-Chemie GmbH, 81737 München (DE)
(72) Erfinder: Dietl, Stefan, Dr., 84489 Burghausen (DE); Strassberger, Walter, Dr., 84503 Altötting (DE); Kaltenberger, Anita, 84489 Burghausen (DE); Miedl, Mathias, 84570 Polling (DE); Müller, Philipp, Dr., 84489 Burghausen (DE)
(74) Vertreter: Budczinski, Angelika

(56) Entgegenhaltungen:
- EP-A- 0 359 252
- EP-A- 0 627 467
- EP-A- 0 822 230
- EP-A- 0 822 231
- EP-A- 0 982 370
- EP-A- 0 994 159

## Beschreibung

Die vorliegende Erfindung betrifft vernetzbare Siliconmassen, wobei die Organopolysiloxanelastomere Schwerbrennbarkeit und/oder hohe Kriechstromfestigkeit sowie hohe Lichtbogenbeständigkeit aufweisen. Die vorliegende Erfindung betrifft weiterhin ein Verfahren zur Herstellung solcher Massen, hierzu eingesetzte Additive sowie die Verwendung der vernetzbaren Massen.

Kriechstromfeste, schwerbrennbare, lichtbogenbeständige Organopolysiloxanelastomere sind bereits bekannt und werden z.B. erhalten durch Zusatz von Metalloxiden bzw. Oxidhydraten oder durch Zugabe von Platin-Verbindungen ggf. in Kombination mit Metalloxiden und Organosiliciumverbindungen. Hierzu sei beispielsweise auf EP-B 088624 sowie DE-A 38 31 478 verwiesen.

Bekannt ist die Vernetzung durch freie Radikale bildende Mittel wie Acylperoxide, Alkylperoxide und Aryperoxide, durch Kondensation, durch Hochenergiestrahlung sowie durch Anlagerung von Si-gebundenem Wasserstoff an aliphatische Kohlenstoff-Kohlenstoff-Mehrfachbindungen (= "Additionsvernetzung"). Additionsvernetzende, härtbare Organopolysiloxanmassen werden als 2-Komponentensysteme oder als 1-Komponentensysteme angeboten. Die Lagerfähigkeit der in DE-A 3831478 genannten additionsvernetzenden, schwerbrennbaren, kriechstromfesten 1-Komponentensysteme beträgt nur wenige Tage bei Raumtemperatur, da die Vernetzungsreaktion bereits merklich bei Raumtemperatur abläuft. Durch Art und Gehalt der zugesetzten Inhibitoren kann die Topfzeit zwar beliebig verlängert werden, doch ist mit zunehmender Topfzeit eine nachteilige Beeinflussung des Vernetzungsverhaltens untrennbar verbunden, z.B. niedrige Vernetzungsgeschwindigkeit, Untervernetzung etc.

Gegenstand der vorliegenden Erfindung sind Zusammensetzungen, welche durch Vermischen von
(A) 50-90 Gew.-% Organopolysiloxan mit einer Viskosität von 50 bis 100^{.}10⁶ mm²/s bei 25°C,
(B) 10-50 Gew.-% eines Metalloxids aus der Gruppe von Titanoxid, Zirkoniumdioxid, Zinkoxid, Cer(III)- und Cer(IV)oxid;
(C) 0,3-5 Gew.-% Organosiliciumverbindung mit über Kohlenstoff an Silicium gebundenem basischem Stickstoff
(D) 0,05-0,5 Gew.-% Platin berechnet als Element, in Form eines Bis(alkinyl)-Platinkomplexes, der zusätzlich Donor-Liganden aufweist, sowie
(E) 0 bis 5 Gew.-%, bevorzugt 0 Gew.-%, weitere Komponenten hergestellt werden, wobei die Summe der jeweils innerhalb der oben unter (A) bis (E) angegebenen Bereiche gewählten Prozentsätze 100 Gew.-% beträgt und sich die jeweiligen Gew.-% auf das Gesamtgewicht des Additivs beziehen.

Bei dem Bestandteil (A) der erfindungsgemäßen Zusammensetzung kann es sich um beliebige Organopolysiloxane handeln, die zur Verdünnung der erfindungsgemäß eingesetzten Komponenten (B) bis (D) geeignet sind. Vorzugsweise handelt es sich bei Bestandteil (A) um im wesentlichen lineare mit Triorganylsilylgruppen terminierte Diorganopolysiloxane, wobei es sich bei den Organylgruppen bevorzugt um Alkyl- und Alkenylgruppen, besonders bevorzugt Alkylgruppen, handelt. Beispiele für die Alkylgruppen sind die oben für Rest R angegebenen, wobei der Methylrest bevorzugt ist. Beispiele für Alkenylgruppen sind die für Rest R angegebenen, wobei der Vinylrest bevorzugt ist. Der erfindungsgemäß eingesetzte Bestandteil (A) kann außer den Diorganylsiloxaneinheiten gegebenenfalls weitere Siloxaneinheiten, wie Monoorganosiloxyeinheiten oder SiO_{4/2}-Einheiten enthalten. Das Organopolysiloxan (A) hat eine Viskosität von vorzugsweise 500 bis 20^{.}10⁶ mm²/s, besonders bevorzugt 500 bis 100 000 mm²/s, jeweils bei 25°C.

Als Bestandteil (B) der erfindungsgemäßen Zusammensetzung wird bevorzugt zur Erzielung von Kriechstromfestigkeit sowie Lichtbogenbeständigkeit nur Titandioxid oder Zirkoniumdioxid eingesetzt, während zur Erzielung von Schwerbrennbarkeit jedes der vorstehend genannten Metalloxide einsetzbar ist. Besonders bevorzugt wird als Bestandteil (B) Titandioxid und Zirkoniumdioxid eingesetzt, so daß bevorzugt Organopolysiloxanelastomere erhalten werden, die sowohl schwerbrennbar sind als auch hohe Kriechstromfestigkeit und Lichtbogenbeständigkeit aufweisen.

Die erfindungsgemäß eingesetzten Metalloxide (B) weisen eine spezifische Oberfläche (nach BET) von vorzugsweise 5 bis 60 m²/g, besonders bevorzugt 40 bis 60 m²/g, auf.
Als Titandioxid wird dabei insbesondere pyrogen in der Gasphase hergestelltes Titandioxid eingesetzt.

Vorzugsweise sind die Organosiliciumverbindungen mit über Kohlenstoff an Silicium gebundenem, basischem Stickstoff (C) solche ausgewählt aus Einheiten der Formel

YₐR_{b}(OR¹)_{c}SiO_{(4-a-b-c)/2} (I),

worin
R gleich oder verschieden sein kann und einwertige Kohlenwasserstoffreste mit 1 bis 8 Kohlenstoffatom je Rest bedeutet,
R¹ gleich oder verschieden sein kann und Alkylgruppen mit 1 bis 4 Kohlenstoffatom je Rest bedeutet,
Y gleich oder verschieden sein kann und einwertige SiC-gebundene organische Reste mit basischem Stickstoff bedeutet,
a 0, 1, 2 oder 3 ist,
b 0, 1, 2 oder 3 ist,
c 0, 1, 2 oder 3 ist, mit der Maßgabe, daß die Summe a+b+c≤4 ist, die Organosiliciumverbindung mindestens eine Einheit mit a verschieden 0 und maximal 10 Silicium-Atome aufweist.

Bei den erfindungsgemäß eingesetzten Organosiliciumverbindungen (C) kann es sich sowohl um Silane handeln, d.h. Verbindungen der Formel (I) mit a+b+c=4, als auch um Siloxane, d.h. Verbindungen aus Einheiten der Formel (I) mit a+b+c≤3. Vorzugsweise handelt es sich bei den erfindungsgemäß eingesetzten Organosiliciumverbindungen um Silane.

Beispiele für Kohlenwasserstoffreste R sind Alkylreste, wie der Methyl-, Ethyl-, n-Propyl-, Isopropyl-, 2-Ethylhexyl- und Butylreste; Alkenylreste, wie der Vinyl- und Allylrest; cycloaliphatische Kohlenwasserstoffreste, wie der Cyclopentyl- und Cyclohexylrest sowie Methylcyclohexylreste; aromatische Kohlenwasserstoffreste, wie der Phenylrest und Xylylreste; Alkarylreste, wie Tolylreste; und Aralkylreste, wie der Benzylrest.

Vorzugsweise sind die Kohlenwasserstoffreste R insbesondere wenn sie an Siliciumatome, an die auch über Kohlenstoff basischer Stickstoff gebunden ist, gebunden sind, jedoch frei von aliphatischen Mehrfachbindungen, wobei es sich bei Rest R besonders bevorzugt um den Methylrest handelt.

Beispiele für Rest R¹ sind die für Rest R angegebenen Alkylreste, wobei Methyl- und Ethylreste bevorzugt sind.

Vorzugsweise sind die Reste Y solche der Formel

R¹⁰NHR¹¹- (II),

worin
R¹⁰ Wasserstoff, Alkyl- oder Cycloalkyl- oder Aminoalkylreste mit 1 bis 8 Kohlenstoffatomen je Rest bedeutet und
R¹¹ von aliphatischer Mehrfachbindung freie, zweiwertige Kohlenwasserstoffreste mit einem Kohlenstoffatom oder 3 oder 4 Kohlenstoffatomen je Rest bedeutet.

Bei Rest R¹¹ handelt es sich insbesondere um den Rest -(CH₂)₃-.

Beispiele für Rest R¹⁰ sind die für Rest R angegebenen Cycloalkylreste sowie H₂N(CH₂)₃-, H₂N (CH₂) ₂NH (CH₂) ₂-, H₂N (CH₂) ₂-, (H₃C)₂NH(CH₂)₂-, H₂N(CH₂)₄-, H(NHCH₂CH₂)₃- und C₄H₉NH (CH₂)₂NH(CH₂)₂-.

Bevorzugt werden als Organosiliciumverbindungen (C) mit über Kohlenstoff an Silicium gebundenem basischen Stickstoff N-(2-Aminoalkyl)-3-aminopropyltrimethoxysilan, N-(2-Aminoethyl)-3-aminopropyltriethoxysilan, N-(2-Aminoethyl)-3-aminopropylmethyldimethoxysilan, 3-Aminopropyltriethoxysilan, N-(Cyclohexyl)-3-aminopropyltrimethoxysilan, N-(2-Aminoethyl)-3-aminopropyl-tris(trimethylsiloxy)silan und 1,2-Bis[N-(2-aminoethyl)-3-aminopropyl]-1,1,2,2-tetramethyldisiloxan eingesetzt, wobei N-(2-Aminoethyl)-3-aminopropyltrimethoxysilan besonders bevorzugt eingesetzt wird.

Vorzugsweise handelt es sich bei dem erfindungsgemäß eingesetzten Bestandteil (D) um solche Bis(alkinyl)-Platinkomplexe, die als Donor-Liganden Phosphan-Gruppen oder Dien-Reste aufweisen.

Beispiele für den erfindungsgemäß eingesetzten Bestandteil (D) sind a) Bis(alkinyl)bis(phosphan)platin-Verbindungen, ausgewählt aus der Gruppe bestehend aus

(PR^{2''} ₃)₂Pt(-C≡C-R^{3"})₂ (III),

(R^{2''} ₂P-R^{4"}- PR^{2"} ₂) Pt (-C≡C-R^{3"}) ₂ (IV)

und

H-C≡C-R^{5''} -C≡-[-Pt (PR^{2"} ₃)₂-C≡C-R⁵ -C≡C-]ₑ -H (V),

wobei
- R^{2"}: gleich oder verschieden sein kann und einwertige, gegebenenfalls substituierte Kohlenwasserstoffreste mit 1 bis 24 Kohlenstoffatomen, Halogenatome, Wasserstoffatom, Hydroxyreste, -CN oder -SCN bedeutet, die entweder direkt oder über Sauerstoff, Stickstoff oder Schwefel an Phosphor gebunden sind,
- R^{3"}: gleiche oder verschiedene einwertige, gegebenenfalls substituierte Kohlenwasserstoffreste mit 1 bis 24 Kohlenstoffatomen,
- R^{4"}: gleiche oder verschiedene zweiwertige, gegebenenfalls substituierte Kohlenwasserstoffreste mit 1 bis 14 Kohlenstoffatomen,
- R^{5''}: gleiche oder verschiedene zweiwertige, gegebenenfalls substituierte Kohlenwasserstoffreste mit 1 bis 24 Kohlenstoffatomen und
- e: eine ganze Zahl größer oder gleich 1 bedeutet.

Falls es sich bei den Resten R^{2"}, R^{3"}, R^{4"} und R^{5"} um substituierte Kohlenwasserstoffreste handelt, sind als Substituenten Halogenatome, wie F, Cl, Br und J, Cyanoreste sowie Gruppen -OR^{6''} bevorzugt, wobei R^{6"} gleich oder verschieden sein kann und Wasserstoffatom oder einen einwertigen Kohlenwasserstoffrest mit 1 bis 20 Kohlenstoffatomen bedeutet.

Die in den Formeln (III) bis (V) beschriebenen Verbindungen sind bereits bekannt. Hierzu sei z.B. auf EP-A 982 370 verwiesen, die zum Offenbarungsgehalt der vorliegenden Erfindung zu zählen ist, dabei insbesondere auf Absätze [0036] bis [0043].

Bei den erfindungsgemäß eingesetzten Bis(alkinyl)bis(phosphan)-platin-Verbindungen handelt es sich bevorzugt um Bis(alkinyl)-bis(triphenylphosphan)platinkomplexe, wobei trans-(Ph₃P) ₂Pt [-C=CC₆H₁₀ (OH) ] ₂, trans - (Ph₃P) ₂Pt [-C≡C-Ph] ₂ und trans-(Ph₃P)₂Pt(-C≡C-SiMe₃)₂ besonders bevorzugt sind mit Me gleich Methylrest und Ph gleich Phenylrest.

Weitere Beispiele für den erfindungsgemäß eingesetzten Bestandteil (D) sind b) Bis(alkinyl)(η-olefin)platin-Verbindungen, ausgewählt aus der Gruppe bestehend aus 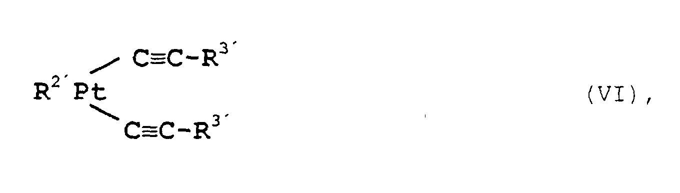 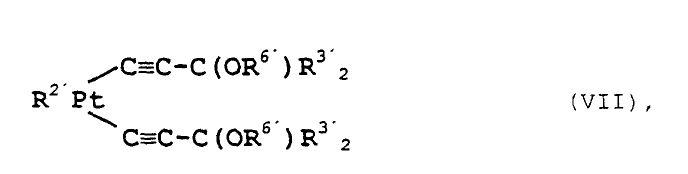 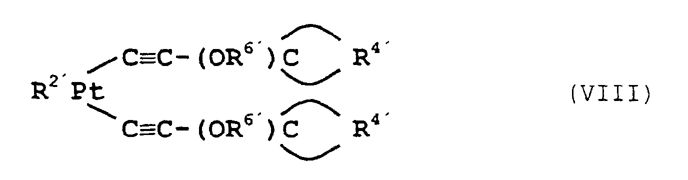 und

**H-C≡C-(R**^{**5'**}**)**_{**f**}**-C≡C-[-Pt(R**^{**2**}**')-C≡C-(R**^{**5'**}**)**_{**f'**} **-C≡C-]**_{**e'**}**-H** (IX),

wobei
- **R**^{**2'**}: ein gegebenenfalls substituiertes Dien bedeutet, das durch mindestens eine π-Bindung mit Platin verbunden ist und eine unverzweigte oder eine verzweigte Kette mit 4 bis 12 Kohlenstoffatomen oder einen cyclischen Ring mit 6 bis 18 Kohlenstoffatomen darstellt,
- **R**^{**3'**}: gleich oder verschieden sein kann und Wasserstoffatom, Halogenatom oder einwertige, gegebenenfalls mit Halogenatomen oder Cyanoresten substituierte Kohlenwasserstoffreste mit 1 bis 24 Kohlenstoffatomen bedeutet,
- **R**^{**4'**}: gleiche oder verschiedene zweiwertige, gegebenenfalls substituierte Kohlenwasserstoffreste mit 1 bis 24 Kohlenstoffatomen bedeutet,
- **R**^{**5'**}: gleich oder verschieden sein kann und zweiwertige, gegebenenfalls substituierte Kohlenwasserstoffreste mit 1 bis 12 Kohlenstoffatomen, Silanreste oder Siloxanreste bedeutet,
- **R**^{**6'**}: gleich oder verschieden sein kann und Wasserstoffatom oder einen einwertigen Kohlenwasserstoffrest mit 1 bis 20 Kohlenstoffatomen ist,
- e': eine ganze Zahl größer oder gleich 1 bedeutet und
- f': 0 oder 1 ist.

Falls es sich bei R^{2'} um ein substituiertes Dien bzw. bei den Resten R^{4'} und R^{5'} um substituierte Kohlenwasserstoffreste handelt, sind als Substituenten Halogenatome, wie F, Cl, Br und J, Cyanoreste, -NR^{6'}₂ sowie Gruppen -OR^{6'} bevorzugt, wobei R^{6'} die oben genannte Bedeutung hat.

Bevorzugt handelt es sich bei Rest **R**^{**2'**} um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 4-Vinyl-1-cyclohexen, und η⁴-1,3,5,7-Cyclooctatetraen, wobei 1,5-Cyclooctadien, 1,5-Dimethyl-1,5-cyclooctadien, 1,6-Dimethyl-1,5-Cyclooctadien besonders bevorzugt sind.

Bevorzugt handelt es sich bei Rest **R**^{**3'**} um Wasserstoffatom und Kohlenwasserstoffreste mit 1 bis 8 Kohlenstoffatomen, wobei Methyl-, Ethyl-, Cyclohexyl- und Phenylreste besonders bevorzugt sind.

Bevorzugt handelt es sich bei Rest **R**^{**4'**} um zweiwertige Kohlenwasserstoffreste mit 1 bis 12 Kohlenstoffatomen, wie z.B. -CH₂-, -C₂H₄-, -C₄H₈-, -C₅H₁₀- und -C₈H₁₆, wobei -C₅H₁₀- besonders bevorzugt ist.

Bevorzugt handelt es sich bei Rest R^{5'} um -CH₂-, -C₂H₄ -, -C₃H₆-, -C₄H₈-, -C₅H₁₀ -, -C₆H₄-, -C₈H₁₆-, -CH₂-N(H) -CH₂-, -CH₂-O-CH₂- , -Si(CH₃)₂-, -Si (CH₃) ₂ [-O-Si (CH₃) ₂] ₚ- und -C₆H₄-Si(CH₃)₂[-O-Si(CH₃)₂]ₚ-C₆H₄-, wobei p gleiche oder verschiedene ganze Zahlen von 1 bis 6000 sind.

Bevorzugt handelt es sich bei **R**^{**6'**} um Wasserstoffatom, Alkylreste und Arylreste, wobei Wasserstoffatom, der Methyl- und der Ethylrest besonders bevorzugt sind.

Die in den Formeln (VI) bis (IX) beschriebenen Verbindungen sind bereits bekannt. Hierzu sei z.B. auf EP-A 994 159 verwiesen, die zum Offenbarungsgehalt der vorliegenden Erfindung zu zählen ist, dabei insbesondere die Absätze [0036] bis [0046].

Bei den erfindungsgemäß eingesetzten Bis(alkinyl) (η-olefin)-platin-Verbindungen des Typs b) handelt es sich bevorzugt um Bis(alkinyl)(1,5-cyclooctadien)platin-, Bis(alkinyl)(1,5-dimethyl-1,5-cyclooctadien)platin- und Bis(alkinyl)(1,6-dimethyl-1,5-cyclooctadien)platin-Komplexe.

Weitere Beispiele für den erfindungsgemäß eingesetzten Bestandteil (D) sind c) Bis(alkinyl)(η-olefin)platin-Verbindungen, ausgewählt aus der Gruppe bestehend aus Verbindungen der Formel (X) 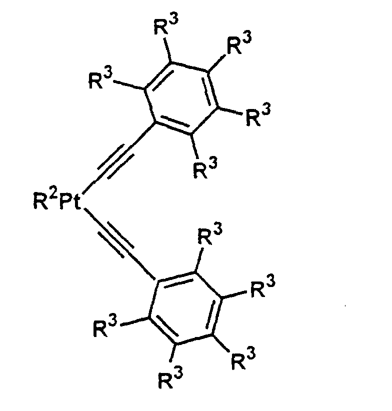 und/oder oligomeren oder polymeren Verbindungen, die aus Struktureinheiten der allgemeinen Formel (XI) 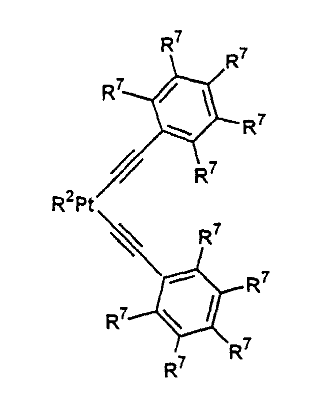 und gegebenenfalls Struktureinheiten der allgemeinen Formel

R⁹ ᵣSiO_{(4-r)/2} (XII)

zusammengesetzt sind,
wobei
- **R**^{**2**}: ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
- **R**^{**3**}: gleich oder verschieden sein kann und Wasserstoffatom, Halogenatom, -SiR⁴₃, -OR⁶ oder einwertige, gegebenenfalls substituierte Kohlenwasserstoffreste mit 1 bis 24 Kohlenstoffatomen bedeutet, mit der Maßgabe, daß in den Verbindungen der Formel (X) mindestens ein Rest R³ die Bedeutung von -SiR⁴₃ hat,
- **R**^{**4**}: gleich oder verschieden sein kann und Wasserstoff, Halogenatom, -OR⁶ oder einwertige, gegebenenfalls substituierte Kohlenwasserstoffreste mit 1 bis 24 Kohlenstoffatomen bedeutet,
- **R**^{**6**}: gleich oder verschieden sein kann und Wasserstoffatom, -SiR⁴₃ oder ein einwertiger gegebenenfalls substituierter Kohlenwasserstoffrest mit 1 bis 20 Kohlenstoffatomen ist,
- **R**^{**7**}: gleich oder verschieden sein kann und Wasserstoffatom, Halogenatom, -SiR⁴₃, -SiR⁴₍₃₋ₜ₎ [R⁸SiR⁹ₛO_{(3-s)/2}]ₜ, -OR⁶ oder einwertige, gegebenenfalls substituierte Kohlenwasserstoffreste mit 1 bis 24 Kohlenstoffatomen bedeutet, mit der Maßgabe, daß in Formel (VI) mindestens ein Rest R⁷ die Bedeutung von -SiR⁴₍₃₋ₜ₎[R⁸SiR⁹ₛO_{(3-s)/2}]ₜ hat,
- **R**^{**8**}: gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
- **R**^{**9**}: gleich oder verschieden sein kann und Wasserstoff oder einen organischen Rest bedeutet,
- r: 0, 1, 2 oder 3 ist,
- s: 0, 1, 2 oder 3 bedeutet und
- t: 1, 2 oder 3 ist.

Falls es sich bei R² um ein substituiertes Dien bzw. bei den Resten R³, R⁴, R⁶, R⁷ und R⁸ um substituierte Kohlenwasserstoffreste handelt, sind als Substituenten Halogenatome, wie F, Cl, Br und J, Cyanoreste, -NR⁶₂, Heteroatome, wie O, S, N und P, sowie Gruppen -OR⁶ bevorzugt, wobei R⁶ die oben genannte Bedeutung hat.

Bevorzugt handelt es sich bei Dien **R**^{**2**} um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 1,8-Cyclotetradekadien, 1,9-Cyclohexadecadien, 1,13-Cyclotetracosadien, Bicyclo[2.2.1]hepta-2,5-dien, 4-Vinyl-1-cyclohexen, und η⁴-1,3,5,7-cyclooctatetraen, wobei 1,5-Cyclooctadien, Bicyclo[2.2.1]hepta-2,5-dien, 1,5-Dimethyl-1,5-cyclooctadien, 1,6-Dimethyl-1,5-cyclooctadien besonders bevorzugt sind.

Bevorzugt handelt es sich bei Rest **R**^{**3**} um Wasserstoffatom, Hydroxy-, Methoxyreste und Kohlenwasserstoffreste mit 1 bis 8 Kohlenstoffatomen sowie Trimethylsilyl-, Ethyldimethylsilyl-, Butyldimethylsilyl-, Octyldimethylsilylreste, wobei Wasserstoffatom, der Methylrest und der Trimethylsilylrest besonders bevorzugt sind.

Bevorzugt handelt es sich bei Rest **R**^{**4**} um einwertige Kohlenwasserstoffreste mit 1 bis 24 Kohlenstoffatomen, wie z.B. die im Zusammenhang mit Rest R³ genannten Beispiele, substituierte Kohlenwasserstoffreste, wie Hydroxypropyl-, und Chlorpropylrest und -OR⁶-Reste, wie Hydroxy-, Methoxy- und Ethoxyreste, wobei Methyl-, Ethyl-, Butyl-, Octyl-, Methoxy-, Ethoxy- und Hydroxypropylreste besonders bevorzugt sind.

Bevorzugt handelt es sich bei **R**^{**7**} um einwertige Reste, wie z.B. Wasserstoffatom, Methyl-, Methoxy-, Trimethylsilyl-, Octyldimethylsilyl-, Dimethylmethoxysilyl-, 1-Trimethylsiloxypropyl-3-dimethylsilyl- und Hydroxypropyldimethylsilylreste sowie um mehrwertige Reste, wie -C₂H₄-, -Si (Me)₂-O-Si (Me)₂O_{1/2,} -Si (Me) ₂-CH₂-CH₂-CH₂-O-Si (Me) ₂O_{1/2}, -Si (Me) ₂-O-Si (Me) O_{2/2}, -Si (Me) ₂-O-SiO_{3/2,} -Si (Me) ₂-CH₂-CH₂-Si (Me) ₂O_{1/2} und -Si (Me) ₂-CH₂-CH₂-Si (Me) O_{2/2}, wobei Me die Bedeutung von Methylrest hat.

Bevorzugt für Reste **R**^{**8**} sind Sauerstoffatom sowie -CH₂-, -C₂H₄-, -C₃H₆-, -C₄H₈-, -C₉H₁₂-, -C₆H₄-, -CH₂CH(CH₃)-C₆H₄-CH(CH₃)CH₂- und -(CH₂)₃O-, wobei Sauerstoffatom, -C₂H₄-, -C₃H₆- und -(CH₂) ₃O- besonders bevorzugt sind.

Bevorzugt handelt es sich bei **R**^{**9**} um einwertige Kohlenwasserstoffreste mit 1 bis 12 Kohlenstoffatomen, wobei Methyl-, Ethyl-, Phenyl- und Vinylreste besonders bevorzugt sind.

Bevorzugt als Einheiten der Formel (XII) sind (Me) ₃SiO_{1/2}-, Vi (Me) ₂SiO_{1/2}-, (Me) ₂SiO_{2/2}-, Ph (Me) SiO_{2/2}-, Vi (Me) SiO_{2/2}- und Me₂(MeO)SiO_{1/2}-MeSiO_{3/2}-, wobei (Me) ₃SiO_{1/2}-, Vi (Me) ₂SiO_{1/2}-, (Me)₂SiO_{2/2}- und Vi(Me)SiO_{2/2}- besonders bevorzugt sind mit Me gleich Methylrest, Vi gleich Vinylrest und Ph gleich Phenylrest.

Die in den Formeln (X) bzw. (XI)/(XII) beschriebenen Verbindungen sind bereits bekannt. Hierzu sei z.B. auf die deutsche Anmeldung mit der Anmeldenummer P19938338.3-44 (Wacker-Chemie GmbH, angemeldet am 13. August 1999) verwiesen, die zum Offenbarungsgehalt der vorliegenden Erfindung zu zählen ist, dabei insbesondere die Seiten 15 bis 19.

Bei den erfindungsgemäß eingesetzten Bis(alkinyl)(η-olefin)platin-Verbindungen handelt es sich bevorzugt um Bis(alkinyl)(1,5-cyclooctadien)-platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Bei dem erfindungsgemäß eingesetzten Bestandteil (D) handelt es sich bevorzugt um Bis(alkinyl)(η-olefin)platin-Verbindungen des Typs b) oder c).

Besonders bevorzugt handelt es sich bei den erfindungsgemäß eingesetzten Platinkomplexen um Bis(alkinyl)(1,5-cyclooctadien)-platin-Komplexe.

Bei dem gegebenenfalls zugesetzten Bestandteil (E) handelt es sich bevorzugt um Hilfsstoffe, insbesondere um solche, welche das Vermischen eines oder mehrerer der Bestandteile (A) bis (D) erleichtern und eine Entmischung verhindern. Beispiele für den gegebenenfalls eingesetzten Bestandteil (E) sind Füllstoffe, wie etwa hochdisperse Kieselsäure.

Bevorzugt wird zur Herstellung der erfindungsgemäßen Zusammensetzung kein Bestandteil (E) verwendet.

Bevorzugt handelt es sich bei den erfindungsgemäßen Zusammensetzungen um solche, die durch Vermischen von
(A) 50-90 Gew.-% Organopolysiloxan mit einer Viskosität von 50 bis 100^{.}10⁶ mm²/s bei 25°C, bei dem die Organylgruppen Alkylund gegebenenfalls Alkenylreste darstellen,
(B) 10-50 Gew.-% Titanoxid oder Zirkoniumoxid,
(C) 0,3-5 Gew.-% Organosiliciumverbindung aus Einheiten der Formel (I) mit über Kohlenstoff an Silicium gebundenem basischen Stickstoff
(D) 0,05-0,5 Gew.-% Platin berechnet als Element, in Form eines Bis(alkinyl)-Platinkomplexes, der zusätzlich Donor-Liganden aufweist,
(E) 0 bis 5 Gew.-% Füllstoff
hergestellt werden, wobei die Summe der jeweils innerhalb der oben unter (A) bis (E) angegebenen Bereiche gewählten Prozentsätze 100 Gew.-% beträgt und sich die jeweiligen Gew.-% auf das Gesamtgewicht des Additivs beziehen.

Besonders bevorzugt handelt es sich bei den erfindungsgemäßen Zusammensetzungen um solche, die durch Vermischen von
(A) 50-90 Gew.-% Organopolysiloxan mit einer Viskosität von 50 bis 100^{.}10⁶ mm²/s bei 25°C, bei dem die Organylgruppen Methylund gegebenenfalls Vinylreste darstellen,
(B) 10-50 Gew.-% Titanoxid,
(C) 0,5-5 Gew.-% Organosiliciumverbindung aus Einheiten der Formel (I) mit über Kohlenstoff an Silicium gebundenem basischen Stickstoff
(D) 0,05-0,5 Gew.-% Platin berechnet als Element, in Form eines Bis(alkinyl)-Platinkomplexes, der zusätzlich Donor-Liganden aufweist,
hergestellt werden, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs beziehen.

Die erfindungsgemäßen Zusammensetzungen können nach beliebigen und bisher bekannten Verfahrensweisen, wie einfaches Vermischen der einzelnen Komponenten hergestellt werden. Hierzu können üblicherweise Rührer oder Kneter verwendet werden. Bevorzugt werden die erfindungsgemäß eingesetzten Komponenten (A) bis (E) bei Raumtemperatur und dem Druck der umgebenden Atmosphäre, also zwischen 900 und 1100 hPa, miteinander vermischt. Sehr häufig kann es von Vorteil sein, einige Komponenten der erfindungsgemäßen Zusammensetzung vorzumischen, wie etwa Komponente (D) mit einem Teil der Komponente (A), insbesondere dann, wenn es sich bei Komponente (D) um ein Pulver handelt.

Bei den erfindungsgemäß eingesetzten Komponenten (A) bis (E) kann es sich jeweils um eine Art einer solchen Komponente wie auch um ein Gemisch aus mindestens zwei Arten einer jeweiligen Komponente handeln.

Die erfindungsgemäßen Zusammensetzungen können flüssig, pastös oder hochviskos sein, bevorzugt sind sie pastös oder hochviskos.

Bevorzugt werden die erfindungsgemäßen Zusammensetzungen als Additiv in Massen eingesetzt, die zu schwerbrennbaren und/oder kriechstromfesten sowie hochlichtbogenbeständigen Organopolysiloxanelastomeren vernetzen.

Ein weiterer Gegenstand der vorliegenden Erfindung sind vernetzbare Massen, welche die erfindungsgemäßen Zusammensetzungen enthalten.

Die erfindungsgemäßen Zusammensetzungen werden der, bevorzugt verarbeitungsfertigen, vernetzbaren Masse in Mengen von vorzugsweise 0,3 bis 3 Gew.-%, besonders bevorzugt 0,6 bis 1,0 Gew.-%, jeweils bezogen auf das Gesamtgewicht der jeweiligen Masse zugegeben.

Durch die geringe Menge an eingesetztem erfindungsgemäßen Additiv wird das Einfärben der zu Organopolysiloxanelastomeren vernetzbaren Massen vorteilhafterweise nicht beeinträchtigt. Ein weiterer Vorteil besteht darin, daß dadurch auch gießbare Massen, die zu kriechstromfesten Organopolysiloxanelastomeren vernetzen, und solche Massen die zu weichen, kriechstromfesten Organopolysiloxanelastomeren mit Shore-A-Härten unter 50 vernetzen, zugänglich sind. Das erfindungsgemäße Additiv führt außerdem zu schwerbrennbaren Organopolysiloxanelastomeren unabhängig von der Art der Vernetzer. So wird die Wirkung des erfindungsgemäßen Additivs beispielsweise nicht durch Peroxide bei der peroxidischen Vernetzung der zu Organopolysiloxanelastomeren vernetzbaren Massen beeinträchtigt.

Abgesehen von dem Gehalt an erfindungsgemäß verwendetem Additiv können die erfindungsgemäßen vernetzbaren Massen die gleichen Bestandteile enthalten, die auch in zu Organopolysiloxanelastomeren vernetzbaren Massen, die kein erfindungsgemäß verwendetes Additiv enthalten, vorliegen können. Diese Bestandteile und ihre Mengenverhältnisse sind bereits vielfach bekannt und sollen zum Offenbarungsgehalt der vorliegenden Erfindung gezählt werden.

Die Vernetzung der erfindungsgemäßen vernetzbaren Massen kann in beliebiger, vielfach bekannter Weise erfolgen.

Die Vernetzung der erfindungsgemäßen vernetzbaren Massen kann z.B. durch freie Radikale bildende Mittel in bekannter Weise erfolgen. Beispiele für derartige Mittel sind peroxidische Verbindungen, wie Acylperoxide, z.B. Dibenzoylperoxid, Bis-(4--chlorbenzoyl)peroxid und Bis-(2,4-dichlorbenzoyl)-peroxid; Alkylperoxide und Arylperoxide, wie Di-tert,-butylperoxid und Dicumylperoxid; Perketale, wie 2,5-Bis-(tert.-butylperoxy)-2,5--dimethylhexan; Perester, wie Diacetylperoxy-dicarbonat, tert.-Butylperbenzoat und tert.Butylperisononanoat, tert.-Butyl-ß-hydroxyethylperoxid; und als freie Radikale bildende Mittel bekannte Azoverbindungen, wie Azoisobuttersäurenitril.

Ebenso kann die Vernetzung der erfindungsgemäßen vernetzbaren Massen z.B. durch Hochenergiestrahlen, wie α-, β- oder γ-Strahlen, in bekannter Weise erfolgen.

Ebenso kann die Vernetzung der erfindungsgemäßen vernetzbaren Massen z.B. durch Anlagerung von Si-gebundenem Wasserstoff an aliphatische Kohlenstoff-Kohlenstoff-Mehrfachbindungen in bekannter Weise erfolgen, wobei die Massen in sogenannten "Einkomponenten-Systemen" oder "Zweikomponenten-Systemen" vorliegen können.

Ebenso kann die Vernetzung der erfindungsgemäßen vernetzbaren Massen z.B. durch Kondensation in bekannter Weise erfolgen, wobei auch hier die Massen in sogenannten "Einkomponenten-Systemen" oder "Zweikomponenten-Systemen" vorliegen können.

Vorzugsweise handelt es sich bei den erfindungsgemäßen vernetzbaren Massen um solche, enthaltend
(i) Verbindungen, die Reste mit aliphatischen Kohlenstoff-Kohlenstoff-Mehrfachbindungen aufweisen,
(ii) Organopolysiloxane mit Si-gebundenen Wasserstoffatomen oder anstelle von (i) und (ii)
(iii) Organopolysiloxane, die SiC-gebundene Reste mit aliphatischen Kohlenstoff-Kohlenstoff-Mehrfachbindungen und Si-gebundene Wasserstoffatome aufweisen, und
(iv) erfindungsgemäße Zusammensetzung.

Im Rahmen der vorliegenden Erfindung sollen von dem Begriff Organopolysiloxane sowohl polymere, oligomere wie auch dimere Siloxane mitumfaßt werden.

Bei den erfindungsgemäßen vernetzbaren Massen handelt es sich vorzugsweise um Einkomponenten-Massen.

Die in den erfindungsgemäßen vernetzbaren Massen eingesetzten Verbindungen (i) und (ii) bzw. (iii) werden bekanntermaßen so gewählt, daß eine Vernetzung möglich ist. So weist beispielsweise Verbindung (i) mindestens zwei aliphatisch ungesättigte Reste auf und Siloxan (ii) mindestens drei Si-gebundene Wasserstoffatome, oder Verbindung (i) weist mindestens drei aliphatisch ungesättigte Reste auf und Siloxan (ii) mindestens zwei Si-gebundene Wasserstoffatome, oder aber anstelle von Verbindung (i) und (ii) wird Siloxan (iii) eingesetzt, welches aliphatisch ungesättigte Reste und Si-gebundene Wasserstoffatome in den obengenannten Verhältnissen aufweist.

Bei der erfindungsgemäß eingesetzten Verbindung (i) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln.

Vorzugsweise enthalten die erfindungsgemäßen Siliconmassen als Bestandteil (i) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können.
Als Organosiliciumverbindungen (i), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

R'ₐ-R^{1'} _{b'}SiO _{(4-a'-b'-)/2} (XIII)

eingesetzt, wobei
**R'** gleich oder verschieden sein kann und einen von aliphatischen Kohlenstoff-Kohlenstoff-Mehrfachbindungen freien, organischen Rest bedeutet,
**R**^{**1'**} gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a'** 0, 1, 2 oder 3 ist und
**b'** 0, 1 oder 2 ist
mit der Maßgabe, daß die Summe a'+ b'kleiner oder gleich 3 ist und im Durchschnitt mindestens 2 Reste R^{1'} je Molekül vorliegen.

Bei Rest **R'** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (XIII) miteinander verbinden.

R' umfaßt die einwertigen Reste -F, -Cl, -Br, -OR⁶, -CN, -SCN, -NCO und SiC-gebundene, gegebenenfalls substituierte Kohlenwasserstoffreste, die mit Sauerstoffatomen oder der Gruppe -C(O)-unterbrochen sein können, sowie zweiwertige, beidseitig gemäß Formel (XIII) Si-gebundene Reste.

Bevorzugt handelt es sich bei Rest **R'** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bevorzugt handelt es sich bei Rest **R**^{**1'**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Besonders bevorzugt als Komponente (i) ist die Verwendung vinylfunktioneller, im wesentlichen linearer Polydiorganosiloxane mit einer Viskosität von 0,01 bis 500 000 Pa^{.}s, besonders bevorzugt von 0,1 bis 100 000 Pa^{.}s, jeweils bei 25°C.

Als Organosiliciumverbindung (ii) können alle hydrogenfunktionellen Organosiliciumverbindungen eingesetzt werden, die auch bisher in additionsvernetzbaren Massen eingesetzt worden sind.

Als Organopolysiloxane (ii), die Si-gebundene Wasserstoffatome aufweisen, werden vorzugsweise lineare, cyclische oder verzweigte Organopolysiloxane aus Einheiten der Formel

R'_{c}-H_{d}SiO_{(4-c'-d)/2} (XIV)

eingesetzt, wobei
**R'** gleich oder verschieden sein kann und die oben angegebene Bedeutung hat,
**c'** 0, 1, 2 oder 3 ist und
**d** 0, 1 oder 2 ist,
mit der Maßgabe, daß die Summe von c'+ d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (ii) Si-gebundenen Wasserstoff im Bereich von 0,04 bis 1,7 Gewichtsprozent, bezogen auf das Gesamtgewicht des Organopolysiloxans (ii).

Besonders bevorzugt ist als Bestandteil (ii) die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa^{.}s, oder analoge SiH-haltige Verbindungen, bei denen ein Teil der Methylgruppen durch 3,3,3-Trifluorpropyl- oder Phenylgruppen ersetzt ist.

Bestandteil (ii) ist vorzugsweise in einer solchen Menge in den erfindungsgemäßen vernetzbaren Silicongesamtmassen enthalten, daß das Molverhältnis von SiH-Gruppen zu aliphatisch ungesättigten Gruppen bei 0,1 bis 20, besonders bevorzugt zwischen 1,0 und 5,0, liegt.

Anstelle von Komponenten (i) und (ii) können die erfindungsgemäßen vernetzbaren Massen Organopolysiloxane (iii), die aliphatische Kohlenstoff-Kohlenstoff-Mehrfachbindungen und Si-gebundene Wasserstoffatome aufweisen, enthalten, was jedoch nicht bevorzugt ist.

Die Bestandteile (i), (ii) und (iii) der erfindungsgemäßen vernetzbaren Masse sind handelsübliche Produkte bzw. in den o.g. Schriften EP-A 982 370, EP-A 994 159 sowie der deutschen Anmeldung mit der Anmeldenummer P19938338.3-44 (Wacker-Chemie GmbH, angemeldet am 13. August 1999) detailliert beschrieben, was zum Offenbarungsgehalt der vorliegenden Erfindung zu zählen ist.

Additionsvernetzbare Massen werden bekanntermaßen mit Platinverbindungen bzw. -komplexen katalysiert. Die Menge an eingesetztem Platinkatalysator richtet sich nach der gewünschten Vernetzungsgeschwindigkeit und der jeweiligen Verwendung sowie ökonomischen Gesichtspunkten. Die Menge an Platin, welche die erfindungsgemäßen Massen über Bestandteil (iv) aufweisen, ist im allgemeinen für die gewünschte Vernetzungsreaktion ausreichend. Falls erwünscht, kann aber auch noch zusätzlich Platinkatalysator zugesetzt werden, wobei dann Platinkomplexe, ausgewählt aus den oben beschriebenen Formeln (III) bis (XI)/(XII) besonders bevorzugt sind.

Außer den Komponenten (i) bis (iv) können die erfindungsgemäßen härtbaren Massen noch alle weiteren Stoffe enthalten, die auch bisher zur Herstellung von additionsvernetzbaren Massen eingesetzt wurden.

Beispiele für verstärkende Füllstoffe, die als Komponente (v) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (v) liegt im Bereich von 0 bis 70 Gew.-%, vorzugsweise bei 0 bis 50 Gew.-%.

Die erfindungsgemäße vernetzbare Siliconkautschukmasse kann wahlweise als Bestandteil (vi) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (i), (ii) und (iii) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Enthalten sein können des weiteren Zusätze (vii), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (vii) hängt von ihrer chemischen Struktur ab, so daß sie individuell bestimmt werden muß.

Der Inhibitorgehalt der erfindungsgemäßen vernetzbaren Massen beträgt vorzugsweise 0 bis 50 000 ppm, besonders bevorzugt 20 bis 5000 ppm, insbesondere 200 bis 2000 ppm.

Die Herstellung der erfindungsgemäßen härtbaren Organopolysiloxanmassen kann nach bekannten Verfahren erfolgen, wie beispielsweise durch gleichmäßige Vermischung der einzelnen Komponenten. Die Reihenfolge dabei ist beliebig. Es kann aber auch eine anwendungsfertige, vernetzbare Masse, die Komponenten (i), (ii) und/oder (iii) sowie Platinkatalysator und ggf. weitere Komponenten enthält, mit dem erfindungsgemäßen Additiv vermischt werden.

Bei den erfindungsgemäß eingesetzten Komponenten (i) bis (vii) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere Drücke, wie z.B. 50000 bis 500000 hPa bei der Preßvulkanisation, angewendet werden. Die Vernetzung kann auch photochemisch mit energiereicher Strahlung, wie z.B. sichtbares Licht mit kurzen Wellenlängen und UV-Licht, oder mit einer Kombination aus thermischer und photochemischer Anregung durchgeführt werden.

Bei den erfindungsgemäßen vernetzbaren Organopolysiloxanmassen handelt es sich besonders bevorzugt um einkomponentige, additionsvernetzbare, hochviskose Massen.

Ein weiterer Gegenstand der vorliegenden Erfindung sind Formkörper hergestellt durch Vernetzung der erfindungsgemäßen vernetzbaren Massen.

Die erfindungsgemäßen vernetzbaren Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden, insbesondere zur Herstellung von elektrischen Isolationsmaterialien, Mittel- und Hochspannungsisulatoren, Kabelendverschlüsse, Kabelmuffen, Anodenkappen für Fernsehbildröhren und Preßteilen sowie Extrusionsartikeln für die Luftfahrtindustrie.

Die erfindungsgemäßen vernetzbaren Massen haben den Vorteil, daß sie in einem einfachen Verfahren und damit wirtschaftlich hergestellt werden können.

Die erfindungsgemäßen vernetzbaren Massen haben den Vorteil, daß sie als einkomponentige Formulierung bei 25°C und Umgebungsdruck eine gute Lagerstabilität aufweisen und erst bei erhöhter Temperatur rasch vernetzen.

Die erfindungsgemäßen vernetzbaren Siliconmassen haben den Vorteil, daß diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt (extrem lange Topfzeit) und die erst bei erhöhter Temperatur rasch vernetzt.

Die erfindungsgemäßen Zusammensetzungen haben den Vorteil, daß sie aufgrund der niedrigen Metalloxiddosierung die Herstellung weicher, einfärbbarer Elastomere ermöglichen, die sehr gute machanische Eigenschaften aufweisen.

Die erfindungsgemäßen vernetzbaren Massen haben ferner den Vorteil, daß die Hydrosilylierungsreaktion sich nicht mit der Reaktionsdauer verlangsamt.

Die erfindungsgemäßen Massen haben ferner den Vorteil, daß die Hydrosilylierungsreaktion sich auch nach langer Lagerung bei Raumtemperatur nicht verlangsamt.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

**COD** bedeutet Cycloocta-1,5-dien,
**p-** bedeutet para-Substitution am Aromaten und
**Me** bedeutet Methylrest.

### Herstellung des Platinkomplexes 1

Eine Suspension von 0,50 g [PtCl₂(COD)] in 20 ml Methanol wurde unter Stickstoff auf -20°C gekühlt. Anschließend wurde eine frisch hergestellte Lösung von 0,77 g (4-Trimethylsilylphenylethinyl)trimethylsilan (hergestellt nach J.Chem.Soc.(C)1967, 1364-1366) und Natriummethanolat (hergestellt aus 61,5 mg Natrium und 15 ml Methanol) langsam zugetropft. Nach ca. 20 Minuten wurde auf Raumtemperatur erwärmt, der Niederschlag abfiltriert und mit Aceton fünfmal gewaschen. Es wurden 0,78 g eines Platinkomplexes der nachfolgenden Formel erhalten:

[ (COD) Pt (p-C≡C-C₆H₄-SiMe₃) ₂]

### Beispiel 1

### Herstellung des Additivs

3,6 Teile des oben hergestellten Platinkomplexes 1 werden mit 236 Teilen eines mit Dimethylvinylgruppen terminierten Dimethylpolysiloxans mit einer Viskosität von 1000 mm²/s vermischt (Vormischung). Anschließend werden in einem Rührwerk weitere 100 Teile des oben beschriebenen mit Dimethylvinylgruppen terminierten Dimethylpolysiloxans sowie 160 Teile pyrogenes, in der Gasphase erzeugtes Titandioxid mit einer spezifischen Oberfläche nach BET von etwa 50 m²/g zugegeben. Nach homogenem Vermischen bei 23°C werden der Mischung 7 Teile N-(2-Aminoethyl)-3-amino-n-propyltrimethoxysilan zugemischt. Anschließend wird die Mischung unter starkem Rühren für 1 Stunde bei 23°C homogenisiert.

### a) Herstellung einer Kautschukgrundmasse

100 Teile Vinyldimethylsiloxy-endblockiertes Poly(dimethyl/vinylmethyl)siloxan mit 0,031 Gew.-% Vinyleinheiten und einer Viskosität von ca 15^{.}10⁶ mPa^{.}s werden mit 2,8 Teilen α,ω-Dihydroxypolydimethylsiloxan mit einer Viskosität von ca. 40 mPa^{.}s, 9 Teilen pyrogene Kieselsäure mit einer spezifischen Oberfläche gemäß BET von 200 m²/g und 29 Teilen einer hydrophoben, pyrogenen Kieselsäure mit einer spezifischen Oberfläche nach BET von 300 m²/g und einem Kohlenstoffgehalt von 3,9 % für eine Dauer von einer Stunde bei 150°C miteinander verknetet.

### b) Herstellung eines Katalysatorbatchs

Zu 100 Teilen der oben unter a) hergestellten Grundmasse wurden auf einem Mischwalzwerk 0,085 Teile des oben hergestellten Platinkomplexes 1 homogen eingemischt, wobei der so erhaltene Katalysatorbatch 255 ppm Pt enthält.

### c) Herstellung der vernetzbaren Masse

Zu 100 Teilen der oben unter a) hergestellten Grundmasse wurden auf einem Walzwerk 2 Teile des oben unter b) hergestellten Katalysatorbatchs, 0,1 Teile Ethinylcyclohexanol, 2 g Si-H-Vernetzer, wobei der Si-H-Vernetzer ein Mischpolymerisat aus Dimethylsiloxy-, Methylhydrogensiloxy- und Trimethylsiloxy-Einheiten mit einer Viskosität von 300 mPa^{.}s und einem Gehalt an Si-gebundenem Wasserstoff von 0,43 Gew.-% war, sowie 0,8 Teile des oben beschriebenen Additivs zugegeben.

Jeweils ein Teil der so hergestellten Masse wurde zur quantitativen Ermittlung der Lagerbarkeit bei 23°C bzw. 50°C gelagert, wobei die Zeitdauer bis zur Verdoppelung des Anfangswertes der Viskosität ermittelt wurde.

Die thermischen Härtungseigenschaften der so hergestellten Masse, wie z.B. die Anspringtemperatur, wurden mit einem Goettfert-Elastograph gemessen.

Aus der so hergestellten Masse wurden zudem durch Vulkanisation bei 165°C Platten mit einer Dicke von 2 mm und 6 mm hergestellt. Die so erhaltenen Platten werden nach Vulkanisation 4 Stunden bei 200°C in einem Umluftofen getempert.

An einem Teil der Platten wird die Schwerbrennbarkeit bestimmt, wobei das Ausmaß der Flammabweisung jeweils durch den LOI-(Limited Oxygen Index)-Wert, der gemäß ASTM-D 2863-70 bestimmt wird, wiedergegeben wird. Je höher die LOI-Wert um so höher ist das Ausmaß der Flammabweisung. Weiterhin werden die Kriechstromfestigkeit nach DIN 57303 sowie die Lichtbogenbeständigkeit nach DIN 57441 ermittelt. Der nach der Bestimmung der Kriechstromfestigkeit auftretende Gewichtsverlust wird ebenfalls ermittelt.
Des weiteren werden an den getemperten Platten mechanische Eigenschaften Härte nach Shore A gemäß DIN 53505, Reißdehnung und Reißfestigkeit gemäß DIN 53504 S1 sowie der Weiterreißwiderstand gemäß ASTM D 624 B bestimmt.

Die Ergebnisse finden sich in Tabelle 1.

### Vergleichsbeispiel 1 (V1)

Die in Beispiel 1 beschriebene Arbeitsweise wird wiederholt, mit der Abänderung, daß zur Herstellung der vernetzbaren Masse kein Additiv zugesetzt wird. Die Ergebnisse finden sich in Tabelle 1.

### Vergleichsbeispiel 2 (V2)

### Herstellung einer Platin enthaltenden Vergleichsmischung

Zu einer Mischung aus 10 Teilen H₂PtCl₆^{.}6H₂O, 20 Teilen 1,3-Divinyl-1,1,3,3-tetramethyldisiloxan und 50 Teilen Ethanol wurden 20 Teile Natriumbicarbonat gegeben. Das Gemisch wurde 30 Minuten unter Rühren zum Sieden unter Rückfluß erwärmt, dann 15 Stunden stehen gelassen und danach filtriert. Aus dem Filtrat wurden bei etwa 16 hPa (abs.) die flüchtigen Bestandteile abdestilliert. Als Rückstand wurden 17 Teile einer Flüssigkeit erhalten, die in Benzol gelöst wurde. Die Lösung wurde filtriert und aus dem Filtrat das Benzol abdestilliert. Der Rückstand wurde mit Dimethylvinylsiloxaneinheiten als endständige Einheiten aufweisendem Dimethylpolysiloxan mit einer Viskosität von 1400 mPa^{.}s als Verdünnungsmittel in solcher Menge vermischt, daß die Mischung 1 Gew.-% Platin, berechnet als Element, enthält.

Die in Beispiel 1 beschriebene Arbeitsweise wird wiederholt, mit der Abänderung, daß anstelle der insgesammt rund 240 Teile Vormischung im beschriebenen Additiv 120 Teile der oben beschriebenen Platin enthaltenden Vergleichsmischung eingesetzt werden.
Zusätzlich werden als Verdünnungsmittel 120 Tle eines dimethylvinylterminierten Dimethylpolysiloxans mit einer Viskosität von ca. 1000 mm²/s zugemischt.
Die Ergebnisse finden sich in Tabelle 1.

### Vergleichsbeispiel 3 (V3)

Die in Beispiel 1 beschriebene Arbeitsweise wird wiederholt, mit der Abänderung, daß zur Herstellung des Additivs kein aminofunktionelles Silan verwendet wird. Die Ergebnisse finden sich in Tabelle 1.

**Tabelle 1**

| **Beispiel** | **1** | **V1** | **V2** | **V3** |
|---|---|---|---|---|
| | | | | |
| Lagerung bei 23°C | > 4 Mt | > 4 Mt | < 5 h | < 24 h |
| Lagerung bei 50°C | Ca. 20 d | Ca. 20 d | -- | -- |
| Anspringtemperatur | 139°C | 137°C | 93°C | 132°C |
| Kriechstromfestigkeit | 4,5 kV | 2,5 kV (nicht bestanden) | 3,5 kV | 2,5 kV |
| Gewichtsverlust | 0,2 % | 1,4 % | 1,0 % | 1,5 % |
| Lichtbogenbeständigkeit | 352 s | 265 s | 362 s | 144 s |
| LOI | 27 % | 24 % | 26 % | 23 % |
| Härte [Shore A] | 37 | 36 | 46 | 39 |
| Reißdehnung [%] | 1220 | 1260 | 1170 | 1210 |
| Reißfestigkeit [N/mm²] | 6,5 | 6,8 | 6,7 | 7,3 |
| Weiterreißwiderstand | 28 N/mm | 28 N/mm | 25 N/mm | 25 N/mm |
| d: Tag | | | | |
| h: Stunde | | | | |
| Mt: Monat | | | | |

## Patentansprüche

1. Zusammensetzungen, welche durch Vermischen von
(A) 50-90 Gew.-% Organopolysiloxan mit einer Viskosität von 50 bis 100^{.}10⁶ mm²/s bei 25°C,
(B) 10-50 Gew.-% eines Metalloxids aus der Gruppe von Titanoxid, Zirkoniumdioxid, Zinkoxid, Cer(III)- und Cer(IV)oxid;
(C) 0,3-5 Gew.-% Organosiliciumverbindung mit über Kohlenstoff an Silicium gebundenem basischem Stickstoff
(D) 0,05-0,5 Gew.-% Platin berechnet als Element, in Form eines Bis(alkinyl)-Platinkomplexes, der zusätzlich Donor-Liganden aufweist, sowie
(E) 0 bis 5 Gew.-%, bevorzugt 0 Gew.-%, weitere Komponenten hergestellt werden, wobei die Summe der jeweils innerhalb der oben unter (A) bis (E) angegebenen Bereiche gewählten Prozentsätze 100 Gew.-% beträgt und sich die jeweiligen Gew.-% auf das Gesamtgewicht des Additivs beziehen.

2. Zusammensetzungen gemäß Anspruch 1, **dadurch gekennzeichnet**, da**ß** als Bestandteil (B) Titandioxid oder Zirkoniumdioxid eingesetzt wird.

3. Zusammensetzungen gemäß Anspruch 1 oder 2, **dadurch gekennzeichnet**, da**ß** als Bestandteil (C) Organosilane mit über Kohlenstoff an Silicium gebundenem, basischem Stickstoff eingesetzt werden.

4. Zusammensetzungen gemäß einem oder mehreren der Ansprüche 1 bis 3, **dadurch gekennzeichnet**, da**ß** es sich bei Bestandteil (D) um Bis(alkinyl)(η-olefin)platin-Verbindungen des Typs b) oder c) handelt.

5. Zusammensetzungen gemäß einem oder mehreren der Ansprüche 1 bis 4, **dadurch gekennzeichnet, daß** es sich um solche handelt, die durch Vermischen von
(A) 50-90 Gew.-% Organopolysiloxan mit einer Viskosität von 50 bis 100^{.}10⁶ mm²/s bei 25°C, bei dem die Organylgruppen Methylund gegebenenfalls Vinylreste darstellen,
(B) 10-50 Gew.-% Titanoxid,
(C) 0,5-5 Gew.-% Organosiliciumverbindung aus Einheiten der Formel (I) mit über Kohlenstoff an Silicium gebundenem basischen Stickstoff
(D) 0,05-0,5 Gew.-% Platin berechnet als Element, in Form eines Bis(alkinyl)-Platinkomplexes, der zusätzlich Donor-Liganden aufweist,
hergestellt werden, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs beziehen.

6. Vernetzbare Massen, welche Zusammensetzungen gemäß einem oder mehreren der Ansprüche 1 bis 5 enthalten.

7. Vernetzbare Massen gemäß Anspruch 6, **dadurch gekennzeichnet**, da**ß** ihnen Zusammensetzungen gemäß einem oder mehreren der Ansprüche 1 bis 5 in Mengen von 0,3 bis 3 Gew.-%, bezogen auf das Gesamtgewicht der jeweiligen Masse, zugegeben wurden.

8. Vernetzbare Massen gemäß Anspruch 6 oder 7, **dadurch gekennzeichnet**, da**ß** es sich um solche handelt, die
(i) Verbindungen, die Reste mit aliphatischen Kohlenstoff-Kohlenstoff-Mehrfachbindungen aufweisen,
(ii) Organopolysiloxane mit Si-gebundenen Wasserstoffatomen oder anstelle von (i) und (ii)
(iii) Organopolysiloxane, die SiC-gebundene Reste mit aliphatischen Kohlenstoff-Kohlenstoff-Mehrfachbindungen und Si-gebundene Wasserstoffatome aufweisen, und
(iv) Zusammensetzung gemäß einem oder mehreren der Ansprüche 1 bis 5
enthalten.

9. Formkörper hergestellt durch Vernetzung der Massen gemäß einem oder mehreren der Ansprüche 6 bis 8.

## Claims

1. Compositions prepared by mixing
(A) 50-90 wt% of organopolysiloxane having a viscosity of from 50 to 100·10⁶ mm²/s at 25°C,
(B) 10-50 wt% of a metal oxide from the group consisting of titanium oxide, zirconium dioxide, zinc oxide, cerium(III) and cerium(IV) oxide,
(C) 0.3-5 wt% of organosilicon compound containing basic nitrogen bound to silicon via carbon,
(D) 0.05-0.5 wt% of platinum calculated as the element, in the form of a bis(alkynyl)platinum complex which additionally includes donor ligands, and
(E) from 0 to 5 wt%, preferably 0 wt%, of further components, the sum of the percentages chosen within each of the ranges specified under (A) to (E) being 100 wt%, and the wt% in each case being based on the total weight of the additive.

2. Compositions according to Claim 1, **characterized in that** the component (B) used is titanium dioxide or zirconium dioxide.

3. Compositions according to Claim 1 or 2, **characterized in that** the component (C) used comprises organosilanes containing basic nitrogen bound to silicon via carbon.

4. Compositions according to one or more of Claims 1 to 3, **characterized in that** component (D) comprises bis(alkynyl)(η-olefin)platinum compounds of type b) or c) .

5. Compositions according to one or more of Claims 1 to 4, **characterized in that** they are prepared by mixing
(A) 50-90 wt% of organopolysiloxane having a viscosity of from 50 to 100·10⁶ mm²/s at 25°C, where the organyl groups are methyl and possibly vinyl radicals,
(B) 10-50 wt% of titanium oxide,
(C) 0.5-5 wt% of organosilicon compound comprising units of formula (I) containing basic nitrogen bound to silicon via carbon,
(D) 0.05-0.5 wt% of platinum calculated as the element, in the form of a bis(alkynyl)platinum complex which additionally includes donor ligands, the sum of the percentages chosen within each of the ranges specified under (A) to (D) being 100 wt%, and the wt% in each case being based on the total weight of the additive.

6. Crosslinkable preparations comprising compositions according to one or more of Claims 1 to 5.

7. Crosslinkable preparations according to Claim 6, **characterized in that** they were admixed with compositions according to one or more of Claims 1 to 5 in amounts of from 0.3 to 3 wt%, based on the total weight of each preparation.

8. Crosslinkable preparations according to Claim 6 or 7, **characterized in that** they comprise
(i) compounds containing radicals having aliphatic carbon-carbon multiple bonds,
(ii) organopolysiloxanes containing Si-bound hydrogen atoms or, instead of (i) and (ii),
(iii) organopolysiloxanes containing SiC-bound radicals having aliphatic carbon-carbon multiple bonds and Si-bound hydrogen atoms, and
(iv) compositions according to one or more of Claims 1 to 5.

9. Molded article prepared by crosslinking the preparations according to one or more of Claims 6 to 8.

## Revendications

1. Compositions préparées par mélange de
(A) 50 à 90% en poids d'organopolysiloxane présentant une viscosité de 50 à 100.10⁶ mm²/s à 25°C,
(B) 10 à 50% en poids d'un oxyde de métal du groupe constitué par l'oxyde de titane, le dioxyde de zirconium, l'oxyde de zinc, l'oxyde de cérium (III) et l'oxyde de cérium (IV),
(C) 0,3 à 5% en poids d'un composé organosilicié avec de l'azote basique lié au silicium via du carbone
(D) 0,05 à 0,5% en poids de platine, calculé en tant qu'élément, sous forme d'un complexe bis(alcynyl)platine, qui présente en outre des ligands donneurs, ainsi que de
(E) 0 à 5% en poids, de préférence 0% en poids, d'autres composants, la somme des pourcentages choisis à chaque fois dans les plages indiquées aux points (A) à (E) ci-dessus valant 100% en poids et le pourcentage en poids se rapportant à chaque fois au poids total de l'additif.

2. Compositions selon la revendication 1, **caractérisées en ce qu'**on utilise, comme constituant (B), du dioxyde de titane ou du dioxyde de zirconium.

3. Compositions selon la revendication 1 ou 2, **caractérisées en ce qu'**on utilise, comme constituant (C), des organosilanes avec de l'azote basique, lié au silicium via du carbone.

4. Compositions selon l'une ou plusieurs des revendications 1 à 3, **caractérisées en ce qu'**il s'agit, pour le constituant (D) de composés bis(alcynyl)(η-oléfine)platine de type b) ou c).

5. Compositions selon l'une ou plusieurs des revendications 1 à 4, **caractérisées en ce qu'**il s'agit de compositions, obtenues par mélange de
(A) 50 à 90% en poids d'organopolysiloxane présentant une viscosité de 50 à 100.10⁶ mm²/s à 25°C, où les groupes organyle représentent des radicaux méthyle et le cas échéant vinyle,
(B) 10 à 50% en poids d'oxyde de titane,
(C) 0,5 à 5% en poids d'un composé organosilicié constitué par des unités de formule (I) avec de l'azote basique lié au silicium via du carbone
(D) 0,05 à 0,5% en poids de platine, calculé en tant qu'élément, sous forme d'un complexe bis (alcynyl) -platine, qui présente en outre des ligands donneurs, la somme des pourcentages choisis à chaque fois dans les plages indiquées aux points (A) à (D) ci-dessus valant 100% en poids et le pourcentage en poids se rapportant à chaque fois au poids total de l'additif.

6. Masses réticulables, qui contiennent des compositions selon l'une ou plusieurs des revendications 1 à 5.

7. Masses réticulables selon la revendication 6, **caractérisées en ce que** des compositions selon l'une ou plusieurs des revendications 1 à 5 y sont ajoutées en des quantités de 0,3 à 3% en poids, par rapport au poids total de la masse respective.

8. Masses réticulables selon la revendication 6 ou 7, **caractérisées en ce qu'**il s'agit de masses qui contiennent
(i) des composés qui présentent des radicaux avec des liaisons carbone-carbone multiples aliphatiques,
(ii) des organopolysiloxanes avec des atomes d'hydrogène liés par Si ou, au lieu de (i) et (ii),
(iii)des organopolysiloxanes qui présentent des radicaux avec des liaisons carbone-carbone multiples aliphatiques liés par SiC et des atomes d'hydrogène liés par Si, et
(iv) une composition selon l'une ou plusieurs des revendications 1 à 5.

9. Corps façonnés fabriqués par réticulation des masses selon l'une ou plusieurs des revendications 6 à 8.
